# EUROPEAN PATENT APPLICATION

(11) **EP 4 239 181 A1**
(43) Date of publication of application: **06.09.2023**
(21) Application number: 22216902.1
(22) Date of filing: 28.12.2022
(51) Int. Cl.: F02D 9/04, F02D 9/10

(54) **MOTOR-DRIVEN AND COOLED THROTTLE VALVE FOR AN EXHAUST DUCT**

(30) Priority: 04.03.2022 IT 202200004115
(71) Applicant: Marelli Europe S.p.A., 20011 Corbetta (MI) (IT)
(72) Inventor: AMBROSINO, Massimo, 20011 CORBETTA (MI) (IT); LUBRANO, Luigi, 20011 CORBETTA (MI) (IT); MILANI, Emanuele, 20011 CORBETTA (MI) (IT); LASANA, Marco, 20011 CORBETTA (MI) (IT); ROSA, Riccardo, 20011 CORBETTA (MI) (IT)
(74) Representative: Studio Torta S.p.A.

(57) **Abstract**

A motor-driven throttle valve (1) for an exhaust duct and having: a tubular duct (2), which is designed so that exhaust gases can flow through it; a throttle shutter (3), which is arranged inside the tubular duct (2) and is mounted so as to rotate around a rotation axis (4); a first shaft (5), which is mounted so as to rotate around the rotation axis (4) and supports the throttle shutter (3); an electric actuator (6), which is provided with a second shaft (18) and is designed to rotate the first shaft (5) around the rotation axis (4); and a tank (21), which is "U"-shaped, embraces a part of an external surface of the electric actuator (6), has an inlet pipe (22) configured to allow a flow of a cooling liquid directed into the tank (21), and has an outlet pipe (23) configured to allow a flow of the cooling liquid directed out of the tank (21).

## Description

### CROSS-REFERENCE TO RELATED APPLICATIONS

This patent application claims priority from Italian patent application no. 102022000004115 filed on March 4, 2022, the entire disclosure of which is incorporated herein by reference.

### TECHNICAL FIELD

The invention relates to a motor-driven throttle valve for an exhaust duct (namely, suited to be inserted along an exhaust duct to adjust the flow rate of the exhaust gases flowing along the exhaust duct).

### BACKGROUND ART

An exhaust system of an internal combustion engine can comprise (at least) one motor-driven throttle valve, which is controlled so as to change (typically, depending on the engine point) the path followed by the exhaust gases. In an exhaust system, a motor-driven throttle valve can be mounted, for example, in an EGR circuit in order to adjust the flow rate of the recirculated exhaust gases or it can be mounted in the area of the silencer in order to have a greater silencing and, hence, a greater back pressure in the presence of a small load and in order to have a smaller silencing and, hence, a smaller back pressure in the presence of a high load.

A motor-driven throttle valve comprises a tubular duct, which is designed to allow exhaust gases to flow through, a throttle shutter, which is arranged inside the tubular duct and is mounted in a rotary manner around a rotation axis so as to rotate between a maximum closing position and a maximum opening position, a shaft, which is mounted in a rotary manner around the rotation axis and supports the throttle shutter, and an electric actuator, which is designed to rotate the shaft around the rotation axis.

The shaft is normally mounted in a rotary manner by means of two support bearings, which are arranged in the area of two opposite ends of the tubular duct, and at least one of the two support bearings is arranged in the area of a through opening of the tubular duct, through which a side of the shaft projects from the tubular duct in order to receive the motion from the electric actuator (namely, in order to be connected to the electric actuator).

A significant technological challenge for a motor-driven throttle valve for an exhaust duct lies in the thermal screening of the electric actuator, as an electric actuator cannot stand continuous work temperatures exceeding 75-90°C, whereas the exhaust gases flowing through the tubular duct can reach temperatures of more than 600-700°C (in case of installation of the throttle valve in an EGR circuit).

Patent applications DE102018114360A1, DE3707904A1, WO2010123899A1 and US2015226161A1 and utility model DE202008005992U1 describe respective examples of a motor-driven throttle valve for an exhaust duct.

### DESCRIPTION OF THE INVENTION

The object of the invention is to provide a motor-driven throttle valve for an exhaust duct, which can preserve the integrity of the electric actuator and, at the same time, is easy and economic to be manufactured.

According to the invention, there is provided a motor-driven throttle valve for an exhaust duct as claimed in the appended claims.

The appended claims describe preferred embodiments of the invention and form an integral part of the description.

### BRIEF DESCRIPTION OF THE DRAWINGS

The invention will now be described with reference to the accompanying drawings showing a non-limiting embodiment thereof, wherein:
- figure 1 is a perspective view of a motor-driven throttle valve for an exhaust duct according to the invention;
- figure 2 is a partially exploded, perspective view of the throttle valve of figure 1;
- figure 3 is a perspective view of a tank of the throttle valve of figure 1;
- figure 4 is a side view of the throttle valve of figure 1; and
- figures 5 and 6 are two different cross-section views of the throttle valve of figure 1 along cross-section lines V-V and VI-VI, respectively.

### PREFERRED EMBODIMENTS OF THE INVENTION

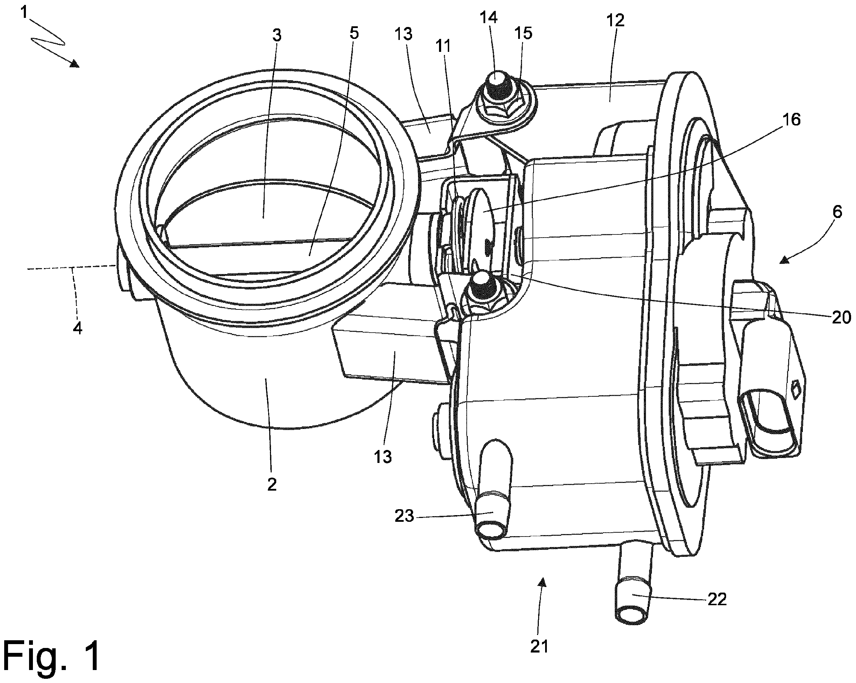

In figure 1, number 1 indicates, as a whole, a motor-driven throttle valve for an exhaust duct (namely, suited to be inserted along an exhaust duct to adjust the flow rate of the exhaust gases flowing along the exhaust duct).

The throttle valve 1 comprises a tubular duct 2, which is designed so that exhaust gases can flow through it, and a throttle shutter 3, which is arranged inside the tubular duct 2 and is mounted in a rotary manner around a rotation axis 4 so as to rotate between a (complete) maximum closing position and a (complete) maximum opening position. Furthermore, the throttle valve 1 comprises a shaft 5, which is mounted so as to rotate around the rotation axis 4 and supports the throttle shutter 3, and an electric actuator 6, which is designed to rotate the shaft 5 around the rotation axis 4.

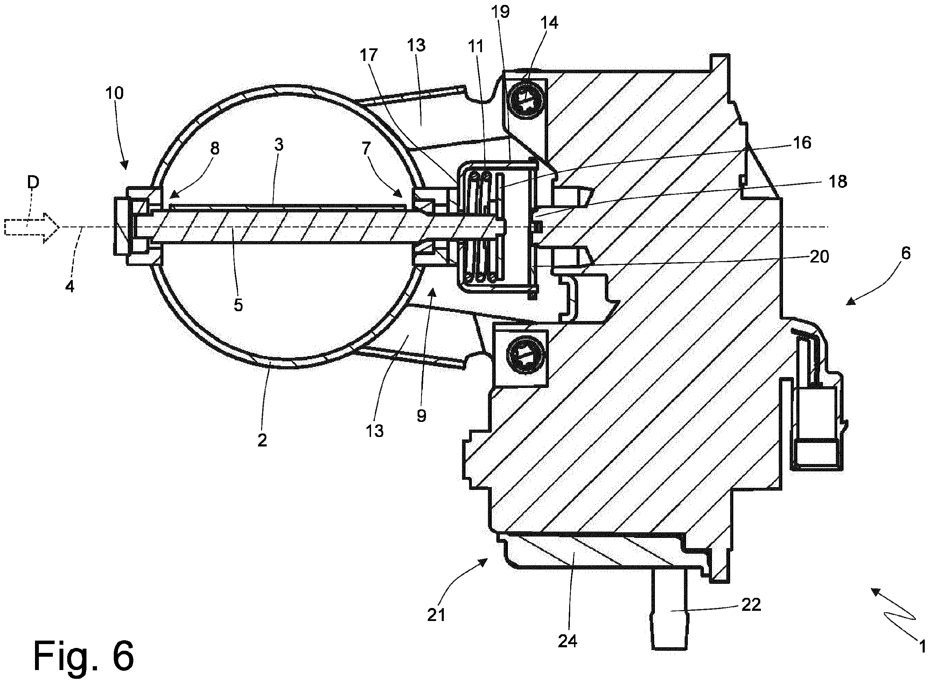

According to figure 6, the shaft 5 projects out of the tubular duct 2 on both sides through two corresponding through openings 7 and 8 opposite one another, which have a circular shape and are coaxial to the rotation axis 4; in particular, each through opening 7 or 8 has a diameter that is significantly larger than the diameter of the shaft 5. The throttle valve 1 comprises a support bearing 9, which supports the shaft 5 in a through manner (namely, the shaft 5 goes through the support bearing 9 from side to side extending past the support bearing 9) and is arranged on the outside of the tubular duct 2 and on a side of the tubular duct 2 in the area of the through opening 7. Furthermore, the throttle valve 1 comprises a support bearing 10, which supports the shaft 5 at the end (namely, the shaft 5 ends in the area of the support bearing 10) and is arranged on the outside of the tubular duct 2 on a side of the tubular duct 2 that is opposite relative to the support bearing 9 in the area of the through opening 8.

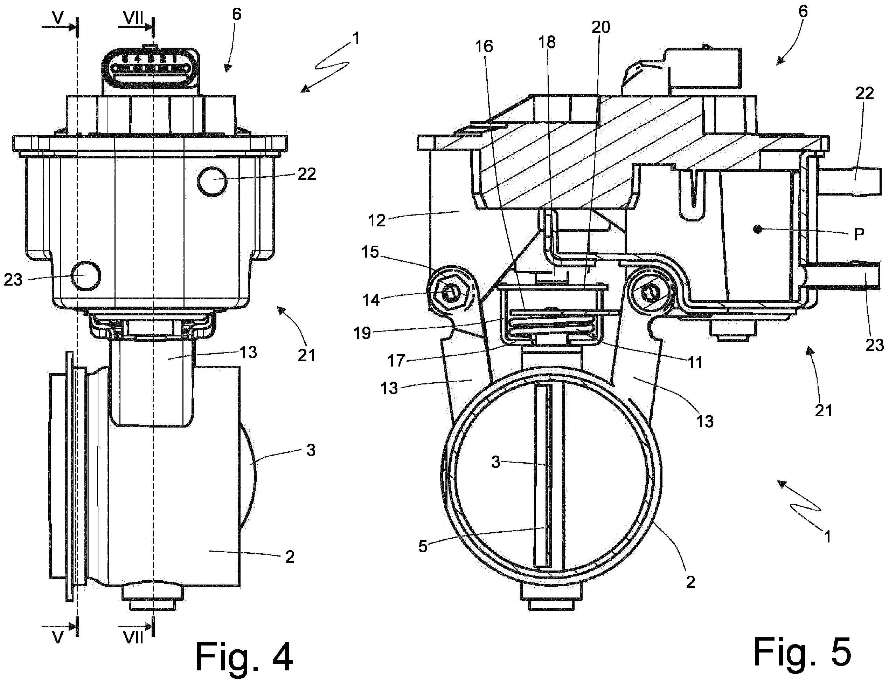

According to figures 5 and 6, the throttle valve 1 comprises a spring 11, which applies an elastic force to the shaft 5, which axially pushes the shaft 5 along a pushing direction D (shown in figure 6) oriented so as to project out of the tubular duct 2 in the area of the side where the support bearing 9 is located (namely, on the side of the tubular duct 2 where the through opening 7 is located).

The electric actuator 6 is provided with two mounting brackets 12, which are internally hollow, are arranged at the two opposite ends of the electric actuator 6 and each has a corresponding through hole. The two support elements 13 are fixed to the tubular duct 2, are "U"-shaped, are made of a bent pressed sheet metal, are welded to an external wall of the tubular duct 2 and each has a corresponding through hole. The electric actuator 6 is connected to the tubular duct 2 by means of the two support elements 13; in particular, each mounting bracket 12 of the electric actuator 6 is coupled to a corresponding support element 13 so as to align the through hole of the mounting bracket 12 with the through hole of the support element 13. A corresponding threaded screw 14 is inserted into the aligned (coaxial) through holes of a mounting bracket 12 and of a corresponding support element 13 and is locked by means of a first nut 15. In the embodiment shown in the accompanying figures, each support element 13 embraces the corresponding mounting bracket 12 from the outside; namely, the corresponding mounting bracket 12 is inserted inside each support element 13.

According to figures 5 and 6, a plate 16 is provided, which is integral to the shaft 5, is arranged on the outside of the tubular duct 2 more externally than the support bearing 9 and constitutes a striker against which the spring 11 is compressed; in particular, a terminal end of the shaft 5 is driven, through interference, into a central through hole of the plate 16 and, if necessary, the terminal end of the shaft 5 is also welded to the plate 16. Furthermore, the plate 16 is made angularly integral to an end of the spring 11.

According to a preferred embodiment, the plate 16 has a tail, which, when the throttle shutter 3 is in the maximum opening (or maximum closing) position, rests on one of the support elements 13; in this way, the tail of the plate 16 defines, in a precise and certain manner (namely, through a mechanical limit stop), the maximum opening (or maximum closing) position of the throttle shutter 3. In other words, the tail of the plate 16 constitutes a mechanical limit stop, which establishes, in a precise and certain manner, the maximum opening (or maximum closing) position of the throttle shutter 3.

According to figures 5 and 6, a plate 17 is provided, which is integral to the shaft 18 of the electric actuator 6, is arranged on the outside of the tubular duct 2 more externally than the support bearing 9, is arranged between the support bearing 9 and the plate 16, is crossed without contact by the shaft 5 and constitutes a striker against which the spring 11 is compressed. In other words, the spring 11 is internally compressed against the plate 17 and is externally compressed against the plate 16; namely, the two plates 16 and 17 define a space, which accommodates the spring 11, which is axially compressed. Furthermore, the plate 17 is made angularly integral to an end of the spring 11. The plate 17 is crossed without contact by the shaft 5 and, in particular, the plate 17 has a through hole, inside which the shaft 5 is arranged and which has a diameter that is properly larger than the diameter of the shaft 5, in order to avoid touching the shaft 5.

According to a preferred embodiment, the plate 17 is part of a tubular connection structure 19 (namely, an internally hollow structure), which contains, on the inside, the plate 16 and the spring 11 and has a plate 20, which is rigidly fixed to the plate 17 and is angularly integral to the shaft 18 of the electric actuator 6. Namely, the plate 16 is arranged between the plate 17 and the plate 20. In particular, the plate 17 has to side walls, which are arranged at the two opposite ends of the plate 17 and end in the plate 20.

Owing to the above, the spring 11 clearly fulfils two functions: applying an axial thrust along the pushing direction D to the shaft 5 and, at the same time, transmitting a rotary motion around the rotation axis 4 from the shaft 18 of the electric actuator 6 to the shaft 5 supporting the throttle shutter 3. Indeed, an end of the spring 11 is integral to the plate 16, which, in turn, is integral to the shaft 5 supporting the throttle shutter 3, whereas the opposite end of the spring 11 is integral to the plate 17, which, in turn, is integral to the shaft 18 of the electric actuator 6. In this way, the rotation movement generated by the electric actuator 6: is transmitted from the shaft 18 of the electric actuator 6 to the plate 17, is transmitted from the plate 17 to the spring 11, is transmitted from the spring 11 to the plate 16 and is finally transmitted from the plate 16 to the shaft 5. It should be pointed out that the spring 11 (inevitably) has a given torsion elasticity; therefore, the transmission of the rotation movement to the shaft 5 through the spring 11 takes place with a given yielding and, hence, with a given shock absorption.

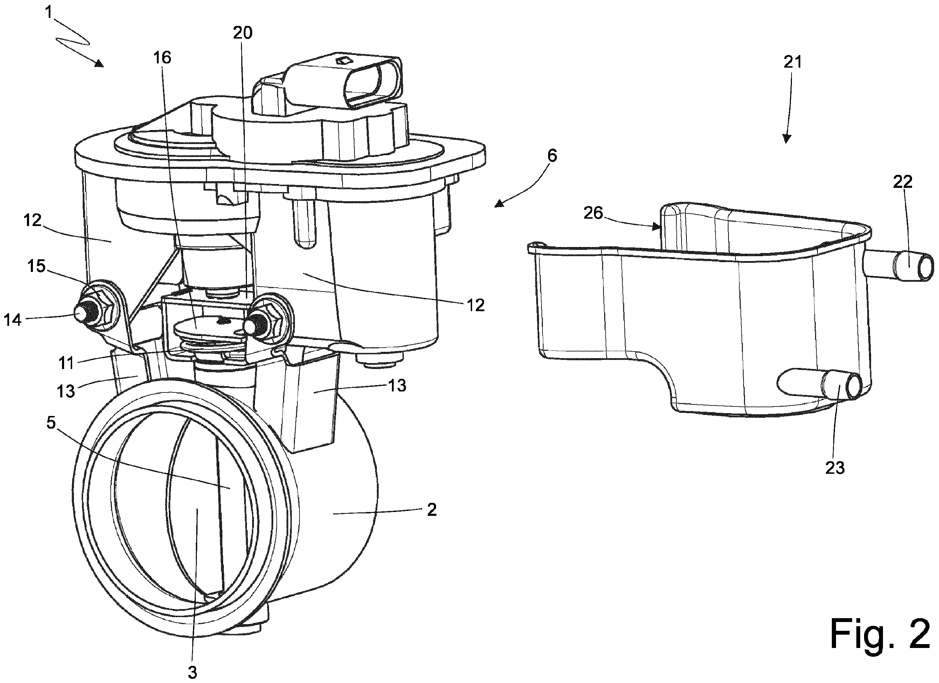

According to figures 1, 2 and 3, the throttle valve 1 comprises a tank 21, which embraces a part of an external surface of the electric actuator 6 (facing the tubular duct 2), has an inlet pipe 22 configured to allow a flow of a (typically water-based) cooling liquid directed into the tank 21, and has an outlet pipe 23 configured to allow a flow of the cooling liquid directed out of the tank 21.

In other words, the tank 21 is arranged between the electric actuator 6 and the tubular duct 2 so as to create a *"thermal screen"* interposed between the electric actuator 6 and the tubular duct 2 so as to protect the electric actuator 6 from the high temperature of the tubular duct 2.

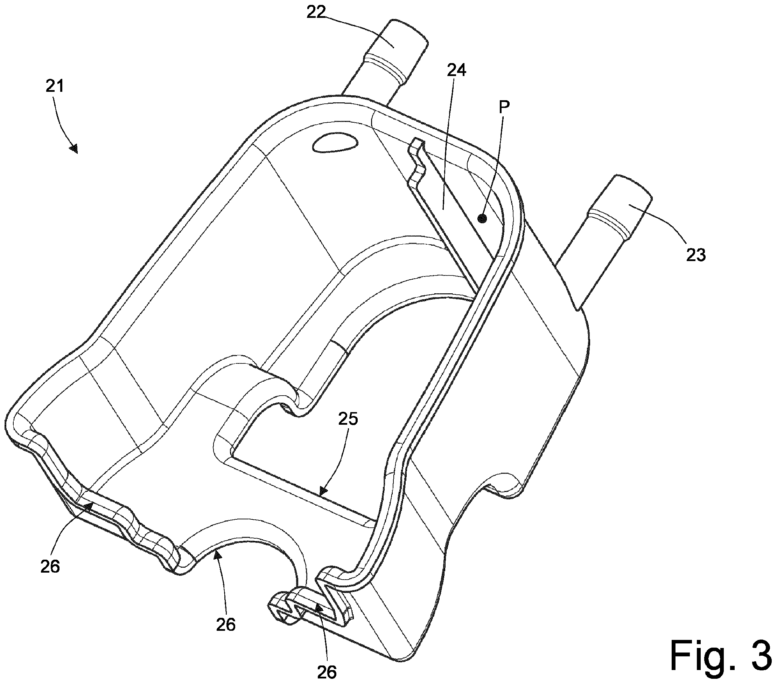

According to figure 3, the tank 21 comprises a bottom wall and a side wall, which is perpendicular to the bottom wall and through which the inlet pipe 22 and the outlet pipe 23 are connected. Furthermore, the tank 21 is completely open at the top, namely it completely lacks an upper wall opposite the bottom wall.

According to figure 3, the tank 21 internally comprises (at least) one separator element 24, which is interposed between the inlet pipe 22 and the outlet pipe 23 and defines, together with the electric actuator 6 and inside the tank 21, a path P that the cooling liquid must travel in order to flow from the inlet pipe 22 to the outlet pipe 23. Namely, the separator element 24 rests, in a sealing manner, on the electric actuator 6 (namely, in pressed, in sealing manner, against the electric actuator 6) in order to define the path P that the cooling liquid must travel in order to flow from the inlet pipe 22 to the outlet pipe 23. The seal created between the separator element 24 and the electric actuator 6 does not have to be perfect, since a small cooling liquid leak between the separator element 24 and the electric actuator 6 does not cause any actual problem (in any case, the cooling liquid remain inside the tank 21 and the only negative consequence is an insignificant reduction in the cooling efficiency); as a consequence, the separator element 24 only rests on and is not welded to the external surface of the electric actuator 6. The path P is designed so as to be long and, hence, affect the entire free internal volume (i.e., not occupied by the electric actuator 6) of the tank 21.

According to figure 3, the tank 21 comprises two through openings 25 and 26 (separate from one another), whose edges rest on the external surface of the electric actuator 6 so as to better (namely, more completely) embrace the electric actuator 6. The through opening 25 is obtained through the bottom wall of the tank 21, whereas the inlet pipe 22 and the outlet pipe 23 are connected to the side wall of the tank 21, which is perpendicular to the bottom wall. The through opening 26 is obtained partly through the bottom wall of the tank 21 and partly through the side wall of the tank 21 on the opposite side relative to the inlet pipe 22 and the outlet pipe 23.

The edges of the tank 21 are welded (for example through laser) to the external surface of the electric actuator 6 so as to create a fluid-tight coupling (which has to ensure the absence of cooling liquid leaks spilling out of the tank 21) .

The embodiments described herein can be combined with one another, without for this reason going beyond the scope of protection of the invention.

The throttle valve 1 described above has numerous advantages.

First, the throttle valve 1 described above preserves the integrity of the electric actuator 6, for it minimizes the transfer of heat from the exhaust gases flowing along the tubular duct 2 to the electric actuator 6. This result is obtained thanks to the limited possibility of transmission of heat through conduction from the tubular duct 2 to the electric actuator 6 and thanks to the tank 21, which constitutes both a thermal screen to the transmission of heat through irradiation and a cooler (heat exchanger) for the electric actuator 6. In this way, all components of the electric actuator 6 never exceed their surviving temperatures (in the range of 150-160 °C), even under the most unfortunate conditions (namely, when the ambient temperature exceeds 40°C and the temperature of the exhaust gases flowing along the tubular duct 2 reaches 950-970 °C).

Furthermore, the throttle valve 1 described above is simple and economic to be manufactured, since it consists of (relatively) few parts with a non-complicated shape and easy to be assembled together.

### LIST OF THE REFERENCE NUMBERS OF THE FIGURES

- 1: throttle valve
- 2: tubular duct
- 3: throttle shutter
- 4: rotation axis
- 5: shaft
- 6: electric actuator
- 7: through opening
- 8: through opening
- 9: support bearing
- 10: support bearing
- 11: spring
- 12: mounting brackets
- 13: support elements
- 14: screw
- 15: nut
- 16: plate
- 17: plate
- 18: shaft
- 19: connection structure
- 20: plate
- 21: tank
- 22: inlet pipe
- 23: outlet pipe
- 24: separator element
- 25: through opening
- 26: through opening
- D: pushing direction
- P: path

## Claims

1. A motor-driven throttle valve (1) for an exhaust duct and comprising:
a tubular duct (2) designed so that exhaust gases can flow through it;
a throttle shutter (3) arranged inside the tubular duct (2) and mounted to rotate around a rotation axis (4);
a first shaft (5), which is mounted to rotate around the rotation axis (4) and supports the throttle shutter (3);
a support bearing (9), which supports the first shaft (5) in a through manner and is arranged on a first side of the tubular duct (2);
an electric actuator (6) provided with a second shaft (18) and designed to rotate the first shaft (5) around the rotation axis (4); and
a tank (21), which embraces a part of an external surface of the electric actuator (6), has an inlet pipe (22) configured to allow a flow of a cooling liquid directed into the tank (21), and has an outlet pipe (23) configured to allow a flow of the cooling liquid directed out of the tank (21) ;
the throttle valve (1) is **characterized in that** the edges of the tank (21) are welded to the external surface of the electric actuator (6).

2. The throttle valve (1) according to claim 1, wherein the tank (21) is arranged between the electric actuator (6) and the tubular duct (2).

3. The throttle valve (1) according to claim 1 or 2, wherein the tank (21) internally comprises at least one separator element (24) which is interposed between the inlet pipe (22) and the outlet pipe (23) and defines inside the tank (21) a path (P) that the cooling liquid must travel in order to flow from the inlet pipe (22) to the outlet pipe (23).

4. The throttle valve (1) according to claim 3, wherein the separator element (24) rests, in a sealing manner, on the electric actuator (6) in order to define the path (P) that the cooling liquid must travel in order to flow from the inlet pipe (22) to the outlet pipe (23).

5. The throttle valve (1) according to claim 4, wherein the separator element (24) only rests on and is not welded to the external surface of the electric actuator (6).

6. The throttle valve (1) according to claim 3, 4 or 5, wherein the path (P) is designed to affect the entire free internal volume, namely the volume that is not occupied by the electric actuator (6), of the tank (21).

7. The throttle valve (1) according to one of the claims from 1 to 6, wherein the tank (21) has a first through opening (25) whose edges rest on the external surface of the electric actuator (6).

8. The throttle valve (1) according to claim 7, wherein the first through opening (25) is obtained through a bottom wall of the tank (21), whereas the inlet pipe (22) and the outlet pipe (23) are connected to a side wall of the tank (21) perpendicular to the bottom wall.

9. The throttle valve (1) according to claim 7 or 8, wherein the tank (21) has a second through opening (26) separated from the first through opening (25) and whose edges rest on the external surface of the electric actuator (6).

10. The throttle valve (1) according to claim 7, 8 or 9, wherein:
the second through opening (26) is obtained partly through a bottom wall of the tank (21) and partly through a side wall of the tank (21) perpendicular to the bottom wall; and
the inlet pipe (22) and the outlet pipe (23) are connected to the side wall of the tank (21) on the opposite side relative to the second through opening (26).

11. The throttle valve (1) according to one of the claims from 1 to 10, wherein:
the tank (21) comprises a bottom wall and a side wall, which is perpendicular to the bottom wall and through which the inlet pipe (22) and the outlet pipe (23) are connected; and
the tank (21) is completely open at the top, namely it completely lacks an upper wall opposite the bottom wall.

12. The throttle valve (1) according to one of the claims from 1 to 11, wherein the tank (21) was, at first, separate from and independent of the electric actuator (6) and was laid on the outer surface of the electric actuator (6).

13. The throttle valve (1) according to one of the claims from 1 to 12 and comprising:
two mounting brackets (12) which are internally hollow, are arranged at the two opposite ends of the electric actuator (6), and each has a corresponding first through hole;
two support elements (13) which are U-shaped, are fixed to an external wall of the tubular duct (2), each has a corresponding second through hole, and are coupled to the mounting brackets (12) in such a way that each first through hole is aligned with a corresponding second through hole; and
two threaded screws (14), each of which engages a corresponding first through hole and a corresponding second through hole and is provided at one end with a nut (15).

14. The throttle valve (1) according to claim 13, wherein each support element (13) is shaped like a "U" and embraces the corresponding mounting bracket (12) from the outside.

15. The throttle valve (1) according to one of the claims from 1 to 14 and comprising a spring (11), which applies an elastic force to the first shaft (5), said elastic force being oriented in an axial manner and pushing the first shaft (5) along an axially oriented pushing direction (D), and is configured to transmit a rotary motion around the rotation axis (4) from the second shaft (18) of the electric actuator (6) to the first shaft (5) supporting the throttle shutter (3).

16. The throttle valve (1) according to claim 15 and comprising a first plate (16), which is integral to the first shaft (5), is arranged on the outside of the tubular duct (2) more externally than the support bearing (9), is angularly integral to a first end of the spring (11), constitutes a striker against which the spring (11) is compressed, and has a tail, which constitutes a mechanical limit stop to establish a maximum opening or closing position of the throttle shutter (3).

17. The throttle valve (1) according to claim 15 or 16 and comprising a second plate (17), which is integral to the second shaft (18) of the electric actuator (6), is arranged on the outside of the tubular duct (2) more externally than the support bearing (9), is arranged between the support bearing (9) and the first plate (16), is crossed without contact by the first shaft (5), is angularly integral to a second end of the spring (11), constitutes a striker against which the first spring (11) is compressed and is part of a connection structure (19), which contains, on the inside, the first plate (16) and the spring (11) and has a third plate (20), which is rigidly fixed to the second plate (17) and is angularly integral to the second shaft (18) of the electric actuator (6).

18. A method to produce the throttle valve (1) according to one of the claims from 1 to 17 and comprising the steps of:
manufacturing the electric actuator (6); and
manufacturing the tank (21) completely separate from and independent of the electric actuator (6);
laying the edges of the tank (21) on the external surface of the electric actuator (6); and
welding the edges of the tank (21) to the external surface of the electric actuator (6).
